# EUROPÄISCHE PATENTANMELDUNG

(11) **EP 2 610 096 A2**
(43) Veröffentlichungstag der Anmeldung: **03.07.2013**
(21) Anmeldenummer: 12198413.2
(22) Anmeldetag: 20.12.2012
(51) Int. Cl.: B60J 7/12, B60J 10/10

(54) **Verdeck für ein Cabriolet-Fahrzeug**

(30) Priorität: 30.12.2011 DE 102011122678
(71) Anmelder: Valmet Automotive Oy, 23500 Uusikaupunki (FI)
(72) Erfinder: Wulf, Markus, 32479 Hille (DE); Hollenbeck, Sven, 49492 Westerkappeln (DE); Theuerkauf, Jürgen, 49565 Bramsche (DE)
(74) Vertreter: Kronthaler, Wolfgang N.K.

(57) **Zusammenfassung**

Es wird ein Verdeck (3) für ein Cabriolet-Fahrzeug (1) vorgeschlagen, welches zwischen einer einen Fahrgastraum (5) abdeckenden geschlossenen Position und einer den Fahrgastraum (5) freigebenden offenen Position verlagerbar ist. Das Verdeck (3) ist mit wenigstens einem einen heckseitigen Teil des Verdecks (3) bildenden, in Fahrzeugquerrichtung verlaufendem Bügel (11) und einem einen Verdeckablageraum (43) in geschlossener Verdeckposition abdeckenden Verdeckkastendeckel (27), welcher in geschlossener Verdeckposition zumindest teilweise an dem Bügel (11) anliegt, ausgebildet. Der wenigstens eine Bügel (11) ist dabei verdeckfrontseitig des Verdeckkastendeckels (27) zum Zusammenwirken mit einem feststehenden Karosserieelement (31) ausgebildet ist, wobei der Bügel (11) in geschlossener Verdeckposition mittels einer ersten Dichteinrichtung (47) gegenüber dem Verdeckkastendeckel (27) abdichtbar ist und mittels einer zweiten Dichteinrichtung (49) gegenüber dem feststehenden Karosserieelement (31) abdichtbar ist.

## Beschreibung

Die Erfindung betrifft ein Verdeck für ein Cabriolet-Fahrzeug, welches zwischen einer einen Fahrgastraum überspannenden geschlossenen Position und einer den Fahrgastraum freigebenden offenen Position verlagerbar ist, nach der im Oberbegriff des Patentanspruches 1 näher definierten Art.

Beispielsweise aus der DE 10 2007 043 019 A1 ist ein derartiges Soft-Top-Verdeck bekannt. Das Soft-Top-Verdeck weist einen Stoffhaltebügel auf, welcher einen Verdeckbezug in geschlossener Verdeckposition in einer gespannten Lage hält. Um das Verdeck aus der geschlossenen Position in einen Ablageraum zu verlagern, ist zunächst ein Verdeckkastendeckel aufzuschwenken. Der Verdeckkastendeckel, welcher in geschlossener Position des Verdecks oberhalb des Stoffhaltebügels und mittels einer Dichtung gegenüber diesem angeordnet ist, wird bei in den Ablageraum verschwenktem Verdeck wieder in seine Position bei geschlossenem Verdeck bewegt und deckt das abgelegte Verdeck nach oben ab.

Das beschriebene Verdeck hat den Nachteil, dass zur Verlagerung des Verdeckkastendeckels aufgrund des Gewichts des Verdeckkastendeckels eine relativ stark dimensionierte Antriebseinrichtung vorgesehen sein muss, welche den Verdeckkastendeckel zwischen seiner geschlossenen Position und seiner offenen Position bewegt.

Es ist Aufgabe der vorliegenden Erfindung, ein Verdeck für ein Cabriolet-Fahrzeug der eingangs genannten Art zu schaffen, welches einen Verdeckkastendeckel mit einem geringen Gewicht aufweist.

Diese Aufgabe wird mit einem Verdeck für ein Cabriolet-Fahrzeug gemäß den Merkmalen des Patentanspruches 1 gelöst. Vorteilhafte Weiterbildungen eines Verdecks nach der Erfindung ergeben sich aus den Unteransprüchen.

Es wird somit ein Verdeck für ein Cabriolet-Fahrzeug vorgeschlagen, welches welches zwischen einer einen Fahrgastraum abdeckenden geschlossenen Position und einer den Fahrgastraum freigebenden offenen Position verlagerbar ist, mit wenigstens einem einen heckseitigen Teil des Verdecks bildenden, in Fahrzeugquerrichtung verlaufendem Bügel und einem einen Verdeckablageraum in geschlossener Verdeckposition abdeckenden Verdeckkastendeckel, welcher in geschlossener Verdeckposition zumindest teilweise an dem Bügel anliegt. Erfindungsgemäß ist vorgesehen, dass der wenigstens eine Bügel verdeckfrontseitig des Verdeckkastendeckels zum Zusammenwirken mit einem feststehenden Karosserieelement ausgebildet ist, wobei der Bügel in geschlossener Verdeckposition mittels einer ersten Dichteinrichtung gegenüber dem Verdeckkastendeckel abdichtbar ist und mittels einer zweiten Dichteinrichtung gegenüber dem feststehenden Karosserieelement abdichtbar ist.

Durch die Erfindung ist in Verdecklängsrichtung eine verkürzte Ausbildung des Verdeckkastendeckels möglich, bei der der Verdeckkastendeckel lediglich an einem Teil des Bügels anliegt, womit der Bügel insgesamt mit einem geringen Gewicht ausbildbar ist. Eine zur Bewegung des Verdeckkastendeckels vorgesehene Antriebseinrichtung kann dementsprechend klein und kostengünstig dimensioniert werden.

Ein weiterer Vorteil eines verkürzten Verdeckkastendeckels liegt darin, dass der Verdeckkastendeckel bei einer Verdecköffnungs- bzw. Verdeckschließbewegung einen geringen Bewegungsraum benötigt. Auch eine Verdecköffnung während einer Fahrt ist mit dem erfindungsgemäßen Verdeck aufgrund der geringeren Baumaße des Verdeckkastendeckels einfach möglich.

Je nach Dimensionierung der Überdeckung mit dem feststehenden Karosserieelement kann der durch die verkürzte Ausbildung des Verdeckkastendeckels entstehende Raum auf einfache Weise überbrückt werden.

Der Bügel kann in geschlossener Verdeckposition mittels einer ersten Dichteinrichtung nach oben gegenüber dem Verdeckkastendeckel und mittels einer zweiten, vorzugsweise verdeckfrontseitig der ersten Dichteinrichtung angeordneten Dichteinrichtung nach unten gegenüber dem feststehenden Karosserieelement abgedichtet werden. Ein derart ausgebildeter Bügel weist somit eine wechselnde Dichtungslinie auf.

Insbesondere bei einer Ausgestaltung des Bügels mit Finnenartigen Ausbildungen an den Verdeckseiten kann der Verdeckkastendeckel in geschlossener Verdeckposition lediglich mit einem heckseitigen Bereich eines unteren, vorzugsweise im Wesentlichen horizontal verlaufenden und einer Verdeckseite zugewandten Bereichs des wenigstens einen Bügels zusammenwirken.

Um im Bereich der Dichteinrichtung vorliegendes Wasser auf einfache Weise abführen zu können, kann in einem die erste Dichteinrichtung mit der zweiten Dichteinrichtung verbindenden Bereich eine Wasserabführeinrichtung angeordnet sein.

Die erste Dichteinrichtung ist bei einer vorteilhaften Ausführung eines erfindungsgemäßen Verdecks zumindest in einem zur Wasserführung vorgesehenen Bereich in Verdeckfrontrichtung abfallend ausgebildet, so dass in einem heckseitigen Bereich der ersten Dichteinrichtung vorliegendes Wasser in Richtung der Wasserabführeinrichtung läuft und von der Wasserabführeinrichtung abgeführt werden kann. Die erste Dichteinrichtung kann dabei insbesondere keilförmig profiliert sein, so dass Wasser auch bei einem in Heckrichtung abfallenden Verdeck sicher in Richtung der Wasserabführeinrichtung geführt werden kann.

Alternativ oder zusätzlich hierzu kann in einem heckseitigen Bereich der ersten Dichteinrichtung, insbesondere im Bereich eines in Verdeckhochrichtung tiefsten Punktes der Dichteinrichtung, eine Wasserabführeinrichtung angeordnet sein.

Bei einer aus optischen Gesichtspunkten vorteilhaften Ausführung des erfindungsgemäßen Verdecks ist der Verdeckkastendeckel derart ausgebildet, dass er in geschlossener Verdeckposition fluchtend zu dem Karosserieelement anordenbar ist.

Das erfindungsgemäße Verdeck kann in einem heckseitigen Bereich des Verdecks eine Heckscheibe aufweisen, welche in geschlossener Verdeckposition der Form eines heckseitigen Bereichs des Verdecks folgend schräg nach hinten abfallend angeordnet ist. Das erfindungsgemäße Verdeck ist alternativ auch mit einer im Wesentlichen vertikal verlaufenden Heckscheibe ausbildbar, so dass das Verdeck eine targaartige Form aufweist.

Der Verdeckkastendeckel kann bei einer optisch ansprechenden Ausführung der Erfindung beispielsweise korrespondierend zu einer Formgebung des Bügels mit heckwärts gerichteten Finnen in den Seitenbereichen jeweils finnenförmig ausgebildet sein.

Bei einer konstruktiv einfachen Ausführung des erfindungsgemäßen Verdecks ist der Verdeckkastendeckel in einem heckseitigen Bereich karosseriefest anlenkbar und über einen Kniehebelmechanismus zwischen seiner geöffneten und seiner geschlossenen Position verlagerbar.

Das erfindungsgemäße Verdeck ist bevorzugt als Soft-Top-Verdeck mit einem flexiblen Verdeckbezug ausgebildet, wobei der Bügel als Stoffhaltebügel bzw. Stoffspannbügel des darüber angeordneten Verdeckbezugs dient. Auch eine Kombination von festen Elementen und einem oder mehrerer Bereiche, welche in geschlossener Verdeckposition von dem flexiblen Verdeckbezug überspannt sind, kann vorgesehen sein. Grundsätzlich ist das Prinzip der Erfindung jedoch auch auf ein Hard-Top anwendbar.

Sowohl die in den Patentansprüchen angegebenen Merkmale als auch die in dem nachfolgenden Ausführungsbeispiel des erfindungsgemäßen Verdecks angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Verdecks ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfacht dargestellte dreidimensionale Ansicht eines Ausschnitts eines Cabriolet-Fahrzeugs mit einem Verdeck, welches in einer geschlossenen Position gezeigt ist;
- Fig. 2: eine der Fig. 1 entsprechende Darstellung des Cabriolet-Fahrzeugs, wobei das Verdeck in einer offenen Position gezeigt ist;
- Fig. 3: eine vereinfachte Ansicht des Cabriolet-Fahrzeugs der Fig. 1 und 2 aus einer Perspektive von schräg links oben, wobei das Verdeck in einem teilgeöffneten Zustand gezeigt ist;
- Fig. 4: eine der Fig. 3 entsprechende Ansicht des Cabriolet-Fahrzeugs aus einer Perspektive von schräg links vorne; und
- Fig. 5: eine vereinfachte Darstellung des Verdecks der Fig. 1 bis 4 in Alleinstellung in einer teilgeöffneten Stellung.

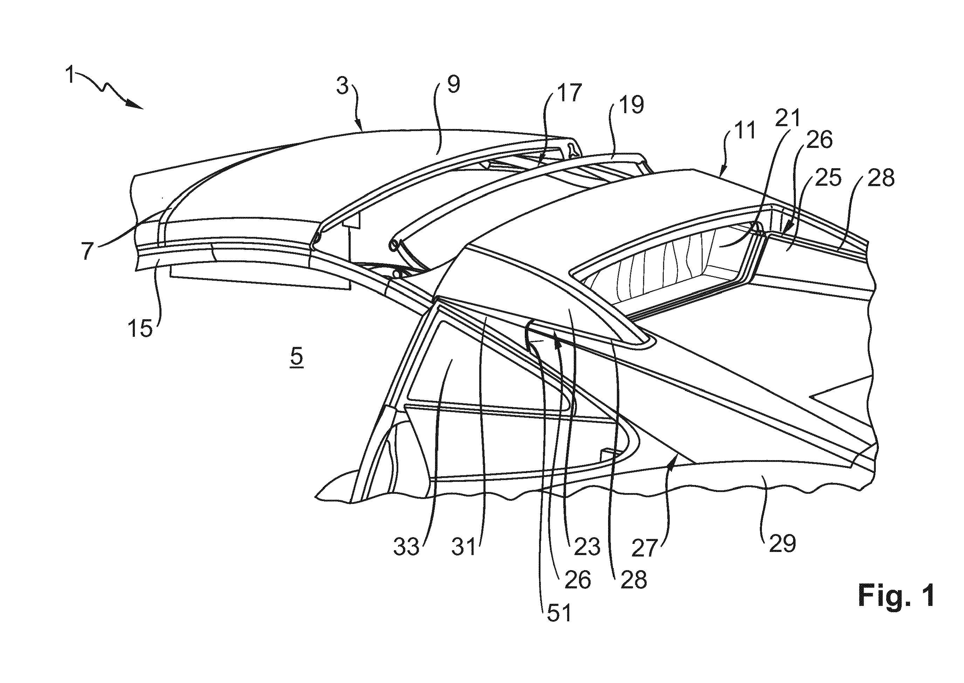

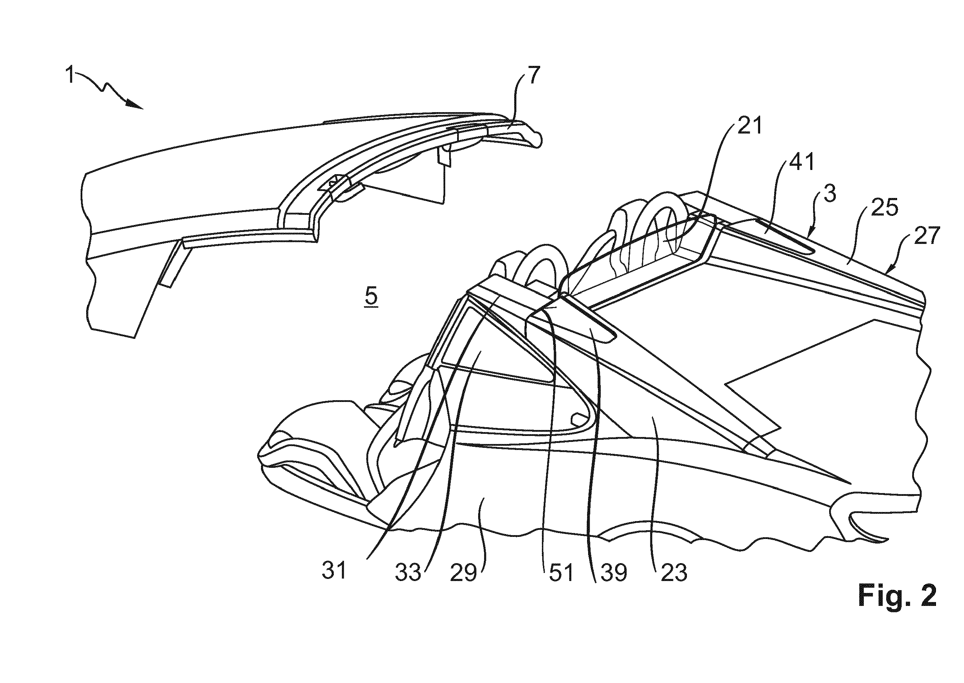

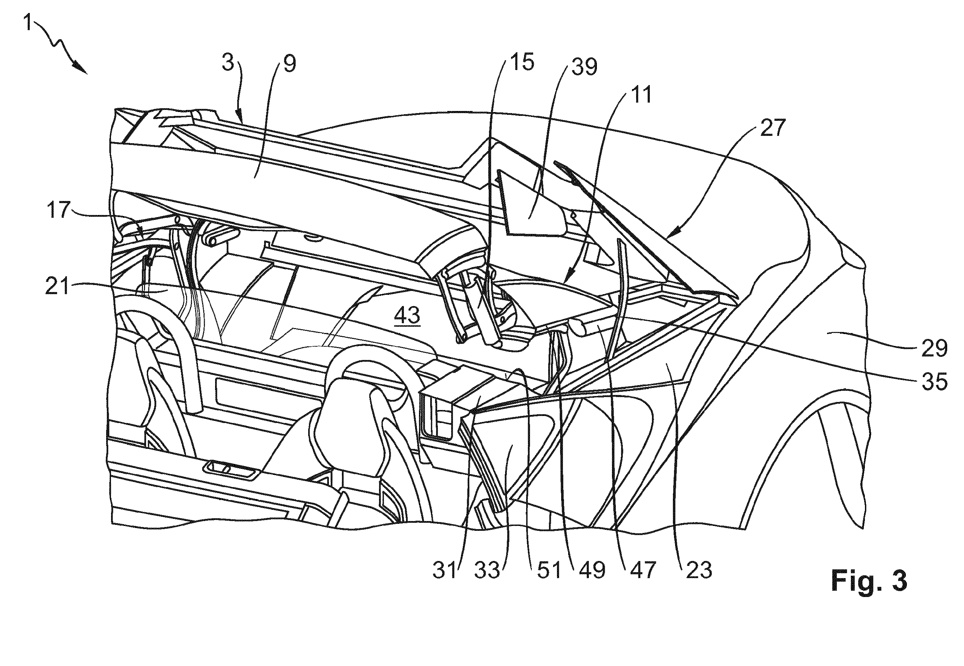

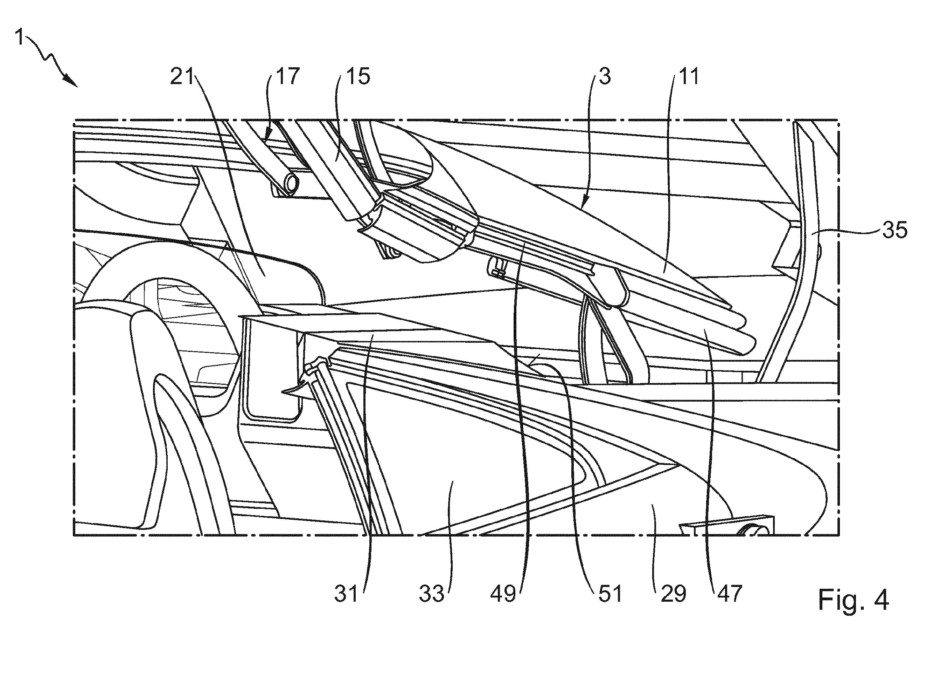

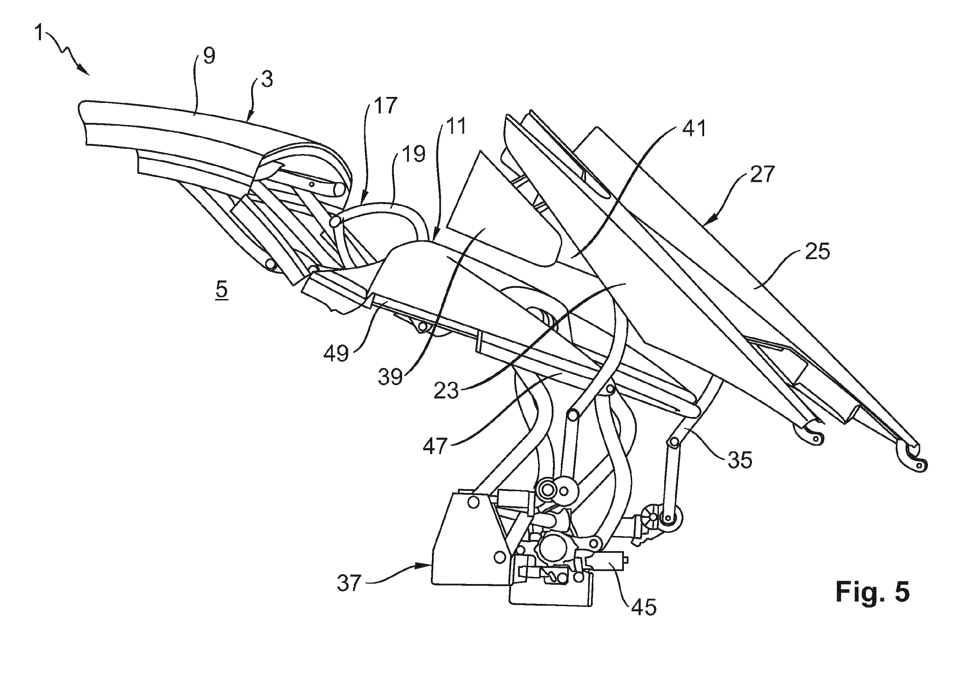

Die Fig. 1 bis 4 zeigen ein targaartig ausgebildetes Cabriolet-Fahrzeug 1, welches vorliegend als Zweisitzer ausgebildet ist, aber in einer alternativen Ausführung der Erfindung beispielsweise auch als Viersitzer ausgebildet sein kann. Das Cabriolet-Fahrzeug 1 weist ein in der Fig. 5 in Alleinstellung ersichtliches Verdeck 3 auf, welches von der in der Fig. 1 dargestellten geschlossenen Position, in der das Verdeck 3 einen Fahrgastraum 5 nach oben abschließt, über die in den Fig. 3 bis 5 gezeigten Zwischenstellungen in die in der Fig. 2 gezeigte offene Position, in der das Verdeck 3 den Fahrgastraum 5 freigibt, und umgekehrt überführbar ist.

Das Verdeck 3 ist vorliegend mit einer in geschlossener Position an einem Windschutzscheibenrahmen 7 anordenbaren Dachspitze 9, einem heckseitigen, einen Stoffhaltebügel 11 darstellenden Bügel und einem in den Fig. 1 bis 5 nicht näher ersichtlichen Verdeckbezug ausgebildet, welcher in geschlossener Verdeckposition von der Dachspitze 9 und dem Stoffhaltebügel 11 in Verdecklängsrichtung und von seitlichen, vorliegend geteilt ausgeführten Dachrahmen 15 eines Verdeckgestänges 17 in Verdeckquerrichtung gehalten und gespannt ist.

Um eine Ausspannung des flexiblen Verdeckbezugs in einem in geschlossener Verdeckposition in Verdecklängsrichtung zwischen der Dachspitze 9 und dem Stoffhaltebügel 11 liegenden Bereich zu verbessern, ist in diesem Bereich ein in Verdeckquerrichtung verlaufender Querspriegel 19 vorgesehen, welcher Teil des Verdeckgestänges 17 ist.

Das Verdeck 3 weist eine im Wesentlichen senkrecht angeordnete und vollständig in einer Karosserie 29 des Cabriolet-Fahrzeugs 1 versenkbare Heckscheibe 21 auf, welche in einem oberen Bereich von dem Stoffhaltebügel 11 und in einem unteren Bereich von einem zur Abdeckung eines heckseitigen Stauraums vorgesehenen Verdeckkastendeckel 27 eingerahmt ist.

Heckwärts der Heckscheibe 21 bilden der Stoffhaltebügel 11 und der Verdeckkastendeckel 27 gemeinsam zwei jeweils einer Fahrzeugseite zugeordnete Finnen 23, 25, welche heckwärts abfallend ausgebildet sind. Ein unter anderem mit dem Verdeckkastendeckel 27 zusammenwirkender unterer Bereich 26 des Stoffhaltebügels 11 verläuft dabei im Wesentlichen horizontal.

Der Verdeckkastendeckel 27 ist gegenüber bekannten Verdecken in Verdecklängsrichtung verkürzt ausgebildet und erstreckt sich vorliegend in Fahrzeuglängsrichtung lediglich bis etwa zu der Heckscheibe 21, d. h. der Verdeckkastendeckel 27 wirkt lediglich mit einem heckseitigen Bereich 28 des unteren Bereichs 26 des Stoffhaltebügels 11 zusammen. In geschlossener Verdeckposition liegt der Verdeckkastendeckel 27 im Bereich der Finnen 23, 25 somit nur auf dem in Verdecklängsrichtung betrachteten hinteren Bereich 28 des Stoffhaltebügels 11 auf.

Der Verdeckkastendeckel 27 wirkt im Bereich der Finnen 23, 25 jeweils in einem U-förmigen Bereich mit dem Stoffhaltebügel 11 zusammen, wobei sich dieser von einem an die Heckscheibe 21 grenzenden Bereich in Verdeckheckrichtung erstreckt, einen hinteren Bereich der Finnen 23, 25 des Stoffhaltebügels 11 umläuft und sich in einem der jeweiligen Verdeckseite zugewandten Bereich in Verdeckfrontrichtung bis zu einem Karosserieelement 31 erstreckt.

Das Karosserieelement 31 verläuft in Fahrzeugfrontrichtung bis etwa zu einem vorderen Ende eines dreiecksförmigen hinteren Seitenfensters 33 spitz zu und ist derart ausgebildet, dass der Verdeckkastendeckel 27 in geschlossener Verdeckposition fluchtend zu dem Karosserieelement 31 angeordnet ist 27.

Bei einer Verdecköffnungsbewegung wird der Verdeckkastendeckel 27, welcher in einem heckseitigen Bereich an der Karosserie 29 angelenkt und in einem hierzu fahrzeugfrontseitigen Bereich über einen vorliegend als Kniehebelmechanismus 35 an ein Hauptlager 37 des Verdecks 3 angebunden ist, in eine in den Fig. 3 bis 5 ersichtliche aufgeschwenkte Position verlagert. Dies ist auch ohne eine Bewegung des Stoffhaltebügels 11 möglich, da der Verdeckkastendeckel 27 in geschlossener Verdeckposition oberhalb des Stoffhaltebügels 11 angeordnet ist. Durch die gegenüber bekannten Verdeckkastendeckeln verkürzte Ausbildung des Verdeckkastendeckels 27 benötigt dieser einen geringeren Bewegungsraum und bietet auch eine kleinere Luftangriffsfläche bei einer Öffnung beispielsweise während einer Fahrt.

Zwei jeweils einem Seitenbereich des Verdecks 3 zugeordnete und an dem Verdeckkastendeckel 27 angelenkte Gestängeklappen 39, 41 befinden sich dabei in einer jeweils eine Öffnung für die finnenartigen Bereiche des Stoffhaltebügels 11 freigebender Position, wobei die Gestängeklappen 39, 41 jeweils in Richtung einer Fahrzeugseite gegenüber dem Verdeckkastendeckel 27 nach unten verschwenkt sind.

Bei geöffnetem Verdeckkastendeckel 27 wird das Verdeck 3 anschließend von einer im Bereich des Hauptlagers 37 angeordneten und mit dem Verdeckgestänge 17 zusammenwirkenden Antriebseinrichtung 45 in einer vorliegend z-förmigen Ablagebewegung in einen heckseitigen Stauraum 43 verlagert, wobei der Stoffhaltebügel 11 gegenüber seiner Position bei geschlossenem Verdeck 3 in seiner Orientierung unverändert abgesenkt und die Dachspitze 9 ebenfalls in ihrer Orientierung gegenüber ihrer Position bei geschlossenem Verdeck unverändert auf dem Stoffhaltebügel 11 angeordnet wird.

Nachdem das Verdeck 3 in den heckseitigen Stauraum 43 bewegt ist, wird der Verdeckkastendeckel 27 zurück in seine Position bei geschlossenem Verdeck 3 bewegt, wobei die Gestängeklappen 39, 41 in eine die Öffnungen für die finnenartigen Bereiche 23, 25 des Stoffhaltebügels 11 verschließende Position überführt werden.

Um eine Abdichtung des Stoffhaltebügels 11 in geschlossener Verdeckposition sowohl gegenüber dem Karosserieelement 31 als auch gegenüber dem Verdeckkastendeckel 27 zu gewährleisten, weist der im Wesentlichen spiegelsymmetrisch zu einer Fahrzeuglängsmittelebene ausgebildete Stoffhaltebügel 27 in den jeweiligen Finnenbereichen 23, 25 jeweils zwei Dichteinrichtungen 47, 49 auf, von denen eine erste, in Fahrzeuglängsrichtung hintere Dichteinrichtung 47 zum Abdichten gegenüber dem Verdeckkastendeckel 27 und eine zweite, sich frontseitig an die erste Dichteinrichtung 47 anschließende Dichteinrichtung 49 zum Abdichten gegenüber dem Karosserieelement 31 vorgesehen ist und im Wesentlichen in Fahrzeuglängsrichtung verläuft. Die erste Dichteinrichtung 47 ist im gesamten, in geschlossener Verdeckposition mit dem Verdeckkastendeckel 27 zusammenwirkenden Bereich angeordnet und verläuft ausgehend von der zweiten Dichteinrichtung 49 um den jeweiligen finnenartigen Bereich 23 ,25 des Stoffhaltebügels 27 u-förmig herum bis zu der Heckscheibe 21.

Die zweite Dichteinrichtung 49 dichtet von dem Stoffhaltebügel 11 aus nach unten gegenüber dem Karosserieelement 31, wohingegen die erste Dichteinrichtung 47 von dem Stoffhaltebügel 11 aus nach oben gegenüber dem Verdeckkastendeckel 27 dichtet. Die erste Dichteinrichtung 47 ist in einem Übergangsbereich zu der zweiten Dichteinrichtung 49 derart ausgebildet, dass sie in geschlossener Verdeckposition an einer in Richtung des Verdeckkastendeckels 27 weisenden Stirnfläche 51 des Karosserieelements 31 zur Anlage kommt. Es liegt somit eine Dichtungslinie vor, welche in geschlossener Verdeckposition in einem Übergangsbereich zwischen dem Karosserieelement 31 und dem Verdeckkastendeckel 27 von oberhalb nach unterhalb des Stoffhaltebügels 11 wechselt.

Zur Abführung von sich im Bereich der Dichteinrichtungen 47, 49 gegebenenfalls sammelnden Wassers ist eine nicht näher ersichtliche Wasserabführeinrichtung in Form einer Ausnehmung im Bereich eines Übergangs zwischen der ersten Dichteinrichtung 47 zu der zweiten Dichteinrichtung 49 vorgesehen. Über die Ausnehmung geführtes Wasser wird über einen Trichter zu einer Wasserfangschale geführt, welche im Bereich einer an den Verdeckkastendeckel 27 grenzenden Stirnfläche 51 des Karosserieelements 31 angeordnet ist. Um auch in einem heckseitigen Bereich der ersten Dichteinrichtung 47 anfallendes Wasser in Richtung der Ausnehmung zu fördern, ist die erste Dichteinrichtung 47 insbesondere derart profiliert ausgebildet, dass zumindest ein Wasser fördernder Bereich der ersten Dichteinrichtung 47 in Fahrzeugheckrichtung ansteigt.

Da das Verdeck 3 grundsätzlich in Richtung Fahrzeugheck abfallend ausgebildet ist, weist die erste Dichteinrichtung 47 insgesamt in einer Seitenansicht eine Keilform auf, so dass die erste Dichteinrichtung 47 in einem fahrzeugfrontseitigen Bereich eine größere Erstreckung in Fahrzeughochrichtung als in einem fahrzeugheckseitigen Bereich aufweist.

In einer hierzu alternativen Ausführung kann es auch vorgesehen sein, dass zur Abführung von Wasser aus dem Bereich der Dichteinrichtungen in einem heckseitigen Bereich der ersten Dichteinrichtung, welche in Fahrzeughochrichtung bei geschlossenem Verdeck am tiefsten gelegen ist eine Ausnehmung angeordnet ist, über welche Wasser mittels eines Schlauchs in die Karosserie geführt werden kann. Der Schlauch würde sich in diesem Fall bei einer Verdecköffnungsbewegung mit dem Verdeck ablegen.

Das Karosserieelement kann bei einer Weiterbildung der Erfindung auch integral mit einer Überrolleinrichtung ausgeführt sein.

## Patentansprüche

1. Verdeck (3) für ein Cabriolet-Fahrzeug (1), welches zwischen einer einen Fahrgastraum (5) abdeckenden geschlossenen Position und einer den Fahrgastraum (5) freigebenden offenen Position verlagerbar ist, mit wenigstens einem einen heckseitigen Teil des Verdecks (3) bildenden, in Fahrzeugquerrichtung verlaufendem Bügel (11) und einem einen Verdeckablageraum (43) in geschlossener Verdeckposition abdeckenden Verdeckkastendeckel (27), welcher in geschlossener Verdeckposition zumindest teilweise an dem Bügel (11) anliegt,
**dadurch gekennzeichnet,**
**dass** der wenigstens eine Bügel (11) verdeckfrontseitig des Verdeckkastendeckels (27) zum Zusammenwirken mit einem feststehenden Karosserieelement (31) ausgebildet ist, wobei der Bügel (11) in geschlossener Verdeckposition mittels einer ersten Dichteinrichtung (47) gegenüber dem Verdeckkastendeckel (27) abdichtbar ist und mittels einer zweiten Dichteinrichtung (49) gegenüber dem feststehenden Karosserieelement (31) abdichtbar ist.

2. Verdeck nach Anspruch 1,
**dadurch gekennzeichnet,.**
**dass** der Verdeckkastendeckel (27) in geschlossener Verdeckposition lediglich mit einem heckseitigen Bereich (28) eines unteren, vorzugsweise im Wesentlichen horizontal verlaufenden und einer Verdeckseite zugewandten Bereichs (26) des wenigstens einen Bügels (11) zusammenwirkt.

3. Verdeck nach Anspruch 1 oder 2,
**dadurch gekennzeichnet,**
**dass** die zweite Dichteinrichtung (49) in geschlossener Verdeckposition verdeckfrontseitig der ersten Dichteinrichtung (47) angeordnet ist.

4. Verdeck nach einem der Ansprüche 1 bis 3,
**dadurch gekennzeichnet,**
**dass** in einem die erste Dichteinrichtung (47) mit der zweiten Dichteinrichtung (49) verbindenden Bereich eine Wasserabführeinrichtung angeordnet ist, welche zur Abführung von im Bereich der Dichteinrichtungen (47, 49) vorliegendem Wasser vorgesehen ist.

5. Verdeck nach Anspruch 4,
**dadurch gekennzeichnet,**
**dass** die erste Dichteinrichtung (47) zumindest in einem zur Wasserführung vorgesehenen Bereich in Verdeckfrontrichtung abfallend ausgebildet ist.

6. Verdeck nach einem der Ansprüche 1 bis 5,
**dadurch gekennzeichnet,**
**dass** in einem heckseitigen Bereich der ersten Dichteinrichtung (47) eine Wasserabführeinrichtung angeordnet ist.

7. Verdeck nach einem der Ansprüche 1 bis 6,
**dadurch gekennzeichnet,**
**dass** der Verdeckkastendeckel (27) derart ausgebildet ist, dass er in geschlossener Verdeckposition fluchtend zu dem Karosserieelement (31) anordenbar ist.

8. Verdeck nach einem der Ansprüche 1 bis 7,
**dadurch gekennzeichnet,**
**dass** in einem heckseitigen Bereich des Verdecks (3) eine Heckscheibe (21) angeordnet ist, welche in geschlossener Verdeckposition der Form eines heckseitigen Bereichs des Verdecks (3) folgend schräg nach hinten abfallend angeordnet ist.

9. Verdeck nach einem der Ansprüche 1 bis 7,
**dadurch gekennzeichnet,**
**dass** in einem heckseitigen Bereich des Verdecks (3) eine Heckscheibe (21) angeordnet ist, welche im Wesentlichen vertikal verläuft.

10. Verdeck nach einem der Ansprüche 1 bis 9,
**dadurch gekennzeichnet,**
**dass** der Verdeckkastendeckel (27) in den Seitenbereichen jeweils finnenförmig ausgebildet ist.

11. Verdeck nach einem der Ansprüche 1 bis 10,
**dadurch gekennzeichnet,**
**dass** der Verdeckkastendeckel (27) in einem heckseitigen Bereich karosseriefest anlenkbar ist und über einen Hebelmechanismus (35) zwischen seiner geöffneten und seiner geschlossenen Position verlagerbar ist.
